# EUROPEAN PATENT SPECIFICATION

(11) **EP 2 072 543 B1**
(45) Date of publication and mention of the grant of the patent: **08.06.2011**
(21) Application number: 07024684.8
(22) Date of filing: 20.12.2007
(51) Int. Cl.: C08F 283/06, C08F 283/00, C08G 65/48, C08L 51/08

(54) **Grafted polymers**
Gepfropfte Polymere
Polymères greffés

(43) Date of publication of application: 24.06.2009
(73) Proprietor: Cognis IP Management GmbH, 40589 Düsseldorf (DE)
(72) Inventor: Andrioletti, Florence, 01700 Miribel (FR); Merlet, Stephanie, 91100 Corbeil-Essonnes (FR); Lapere Jeremie-, - (FR); Marques, Maria Da Silva, 77000 Vaux Le Penil (FR); Lamarca, William, 77124 Cregy les Meaux (FR); Abribat, Benoit, 77310 Sain Fargeau Ponthierry (FR)
(74) Representative: Reinhardt, Jürgen

(56) References cited:
- EP-A- 1 319 676
- WO-A-97/39037
- WO-A-2006/050850
- FR-A- 2 776 285
- US-A- 4 705 525
- US-A- 5 614 017
- US-A- 5 635 554

## Description

### Field of the invention

The present invention is related to the area of polymers and refers to new comb polymers, a process for their production and their use as super-plasticizers or defoamers for concrete or plaster retarders.

### Background of the invention

Polyolefinic acids, particularly polyacrylic acids, grafted with polyglycolethers and mono-methylpolyglycolethers (MPEG) and their use as additives for the manufacture of concrete are well known from literature. Examples for the state of the art can be found *inter alia* in FR 2776285 B1 (Chryso), EP 1260536 A1 (BASF) or WO 97/039037 A1 (Mbt). In this context, reference is also made to international patent application WO 06/050850 A1 (Cognis) disclosing anionic polymers useful as super-plasticizers for concrete, which are obtained by polymerisation of (meth)acrylic acid or their esters with dipropylendiglycolacrylate (DPGDA), tripropylenglycoldiacrylate (TPGDA), acrylamidomethyl propanesulfonic acid (AMPS) and/or acryl acetate (AA) and subsequent treatment of the intermediates with mixtures of short- and long-chain alkylpolyalkyleneglycols. Another group of concrete plasticizers obtained from the polymerisation of maleic acid (anhydride) and (meth)acrylic acid is known from EP 1319676 A1 (Cognis). Polyacrylic acids grafted by polyethyleneglycols and their use as superplasticizers for concrete is also known from EP 1396506 A1 (Cognis). US4705525 discloses water soluble graft copolymers comprising polyalkylene glycol main chain with 2 terminal hydroxyl groups. Finally, WO 97/39037 A1 (Sandoz) describes the use of a styrene/maleic acid anhydride co-polymer, post esterified with a monomethoxy polyglycol ether for the same purpose; the maleate moiety, however, has a symmetric structure.

The products which can be found in the market either provide high fluidity to high-strength cement and concrete compositions or allow an extremely low water-to-cement or concrete ratio. Others reduce the decrease in fluidity, which takes place after a certain time, or control the generation of foam during the making of the final preparations. Unfortunately, none of these products provide a combination of all these properties on a satisfying level. Especially products allowing efficient foam control and to remove air bubbles in the early stage of the manufacture of the concrete show a strong tendency to separate from the mixture and form an organic layer.

Therefore the problem which underlies the present invention was to develop new polymers with improved super-plasticizing and retarding properties in order to overcome the disadvantages known from the state of the art. In particular, the new polymers should allow simultaneously the establishment of an extremely low water-to-cement or concrete ratio, providing high slump retention while maintaining good flowability, and developing low foam during the preparation of the cement or concrete.

### Detailed description of the invention

The present invention refers to grafted polymers, obtainable in that
(a) (Meth)acrylic acid,
(b) Monomethoxypolyethyleneglycol (meth)acrylates, and
(c) C₁₂-C₂₂ fatty alcohol+EO+PO (meth)acrylates
are subjected to copolymerisation and the reaction product thus obtained is subsequently neutralised with an alkaline base and solubilised in water.

Surprisingly it has been observed that the new polymers fulfil the complex requirements as outlined above. They provide high fluidity to high-strength cement and concrete while allowing low water-to-cement ratios. Good slump retentions is obtained, while flowability during this time is maintained. Especially, the products allow an effective control of foam generation and reduce the formation of air bubbles while the problem of surface layering is avoided.

### Process

Another object of the present invention concerns a process for the manufacture of grafted polymers comprising the steps of
(i) subjecting mixtures of
   (a) (meth)acrylic acid,
   (b) monomethoxypolyethyleneglycol (meth)acrylates, and
   (c) C₁₂-C₂₂ fatty alcohol+EO+PO (meth)acrylates
      to a free-radical polymerisation,
(ii) neutralising the acid groups of the polymers thus obtained by means of an alkaline base, and
(iii) solubilising the neutralised polymers in water.

### Monomethoxypolyethyleneglycol (meth)acrylates

Suitable monomethoxypolyethyleneglycol (meth)acrylates, forming component (b) usually follow general formula **(I),**

**CH₃O(CH₂CH₂O)ₙOC-CR¹CH₂** **(I)**

in which R¹ stands for hydrogen or a methyl group and n denotes an integer of from 1 to 200, preferably 25 to 150 and more preferably 50 to 100. Suitable products therefore show average molecular weights of 100 to 10000, preferably 200 to 6000 and most preferably 350 to 5000 Dalton.

### C₁₂-C₂₂ fatty alcohol+EO+PO (meth)acrylates

Suitable C₁₂-C₂₂ fatty alcohol+EO+PO (meth)acrylates, forming component (c), usually follow general formula **(II),**

**R²O(CH₂CH₂O)_{P1}(CHCH₃CH₂O)_{q}(CH₂CH₂O)ₚ₂OC-CR¹=CH₂** **(II)**

in which R¹ stands for hydrogen or a methyl group, R² represents an alkyl or alkenyl radical having 12 to 22, preferably 16 to 18 carbon atoms, p1 and p2 independently stand for 0 or integers of 1 to 50, preferably 2 to 20, and q for an integer of from 1 to 50, preferably 2 to 20. The distribution of ethylene glycol (EO) and propylene glycol (PO) units in the monomer may be block wise or random. For example, it is possible to add a small quantity of EO to the fatty alcohol, followed by PO and optionally another quantity of EO in order to prepare a block polymer, or to mix the quantities of EO and PO, so that a randomised chain of alkylene oxide units is added to the alcohol.

Therefore, fatty alcohol+EO+PO (meth)acrylates (component c) according to general formula **(II)** can be used, in which
o R² stands for an alkyl group having 16 to 18 carbon atoms, p1 represents an integer between 1 and 5, p2 stands for 0 and q means an integer between 10 and 15 (block polymers), or
o R² stands for an alkyl group having 16 to 18 carbon atoms, p1 and p2 represents an average integer between 1 and 5 and q means an average integer between 10 and 15 (random polymers).

A preferred example for component (b) is an adduct of 3 moles EO and 13 moles PO to cetyl stearyl alcohol, which is available in the market under the trademark Agnique^{®} DMF 250 (Cognis).

### Polymerisation

Polymerisation is conducted according to the state of the art. Components a, b and c are transferred into a flask where the polymerisation takes place. The monomers can be used in a molar ratio (a):(b):(c) of from 1:(0.1-10):(0.1:10), preferably 1:(0.5:8):(0.5:8) and most preferably 1:(1-7):(1-7). Usually, the polymerisation takes place in aqueous solution at elevated temperatures of 60 °C to 100 °C, and preferably 80 °C and is initiated by the addition of a conventional starter, such as, for example, ammonium persulfate. Once the polymerisation is completed, the reaction mixture is cooled down and treated with an alkaline base, preferably an aqueous sodium or potassium hydroxide solution in a quantity sufficient to neutralise the acidic functions in the polymer and to prepare salts. Finally, the products are diluted by addition of water in order to adjust the desired active matter content of typically 20 to 50 % b.w., and preferably 35 % b.w.

### Industrial application

The grafted polymers obtained according to the present invention provide high fluidity and better workability to cement, concrete and plaster compositions. Another object of the present invention is therefore the use of said new polymers as so-called super-plasticizers and/or defoamers for concrete or plaster retarders.

### Examples

### Example 1

### Preparation of the grafted polymer

1 Mol acrylic acid, 0.3 Mol monomethoxyethyleneglycol methacrylate and 0.2 Mol Agnique^{®} DFM 250 were placed in a 250-ml-polymerisation flask at room temperature. The mixture was diluted with 58.6 ml water and set under nitrogen bubbling in order to remove all traces of oxygen. Then the mixture was heated to 80°C and 1.4 g starter (ammonium persulfate) was added. Since the polymerisation represents an exothermic reaction, the flask was cooled in order to maintain a reaction temperature of 80 to 90 °C. Once the polymerisation had finished, the product was cooled to room temperature and treated with aqueous sodium hydroxide solution to neutralise the acidic groups in the polymer and diluted with water to adjust a polymer content of 30 % b.w.

### Example 2

### Preparation of the grafted polymer

1 Mol methacrylic acid, 0.35 Mol monomethoxyethyleneglycol methacrylate, and 0.15 Mol Agnique^{®} DFM 250 were placed in a 250-ml-polymerisation flask at room temperature. The mixture was diluted with 58.6 ml water and set under nitrogen bubbling in order to remove all traces of oxygen. Then the mixture was heated to 80 °C and 1.4 g starter (ammonium persulfate) was added. Since the polymerisation represents an exothermic reaction, the flask was cooled in order to maintain a reaction temperature of 80 to 90 °C. Once the polymerisation had finished, the product was cooled to room temperature and treated with aqueous sodium hydroxide solution to neutralise the acidic groups in the polymer and diluted with water to adjust a polymer content of 30 % b.w.

## Claims

1. Grafted polymers, obtainable in that
(a) (Meth)acrylic acid,
(b) Monomethoxypolyethyleneglycol (meth)acrylates, and
(c) C₁₂-C₂₂ fatty alcohol+EO+PO (meth)acrylates
are subjected to copolymerisation and the reaction product thus obtained is subsequently neutralised with an alkaline base and solubilised in water.

2. A process for the manufacture of grafted polymers comprising the steps of
(i) Subjecting mixtures of
(a) (meth)acrylic acid,
(b) monomethoxypolyethyleneglycol (meth)acrylates, and
(c) C₁₂-C₂₂ fatty alcohol+EO+PO (meth)acrylates
to a free-radical polymerisation,
(ii) Neutralising the acid groups of the polymers thus obtained by means of an alkaline base, and
(iii) Solubilising the neutralised polymers in water.

3. A process according to Claim 2, **characterised in that** monomethoxypolyethyleneglycol (meth)acrylates (component b) according to general formula **(I)** are used, **CH₃O(CH₂CH₂O)ₙOC-CR¹=CH₂ (I)** in which R¹ stands for hydrogen or a methyl group and n denotes an integer of from 1 to 200.

4. A process according to Claims 2 and/or 3, **characterised in that** fatty alcohol+EO+PO (meth)acrylates (component c) according to general formula **(II)** are used,
**R²O(CH₂CH₂O)_{P1}(CHCH₃CH₂O)_{q}(CH₂CH₂O)p₂OC-CR¹=CH₂** **(II)**
in which R¹ stands for hydrogen or a methyl group, R² represents an alkyl or alkenyl radical having 12 to 22 carbon atoms, p1 and p2 independently stand for 0 or integers of 1 to 50, and q for an integer of from 1 to 50.

5. A process according to any of the preceding Claims 2 to 4, **characterised in that** fatty alcohol+EO+PO (meth)acrylate block polymers (component c) according to general formula **(II)** are used, in which R² stands for an alkyl group having 16 to 18 carbon atoms, p1 represents an integer between 1 and 5, p2 stands for 0 and q means an integer between 10 and 15.

6. A process according to any of the preceding Claims 2 to 4, **characterised in that** fatty alcohol+EO+PO (meth)acrylate random polymers (component c) according to general formula **(II)** are used, in which R² stands for an alkyl group having 16 to 18 carbon atoms, p1 and p2 represents an average integer between 1 and 5 and q means an average integer between 10 and 15.

7. A process according to any of the preceding Claims 2 to 6, **characterised in that** the monomers (a), (b) and (c) are used in a molar ratio of 1 :(0.1-10):(0.1-10).

8. A process according to any of the preceding Claims 2 to 7, **characterised in that** the polymers are solubilised in order to obtain an aqueous solution showing an active matter content of 20 to 50 % b.w.

9. Use of grafted polymers according to Claim 1 as super-plasticizers for concrete or plaster retarders.

10. Use of grafted polymers according to Claim 1 as defoamers for concrete or plaster retarders.

## Patentansprüche

1. Pfropfpolymere, die **dadurch** erhältlich sind, daß man
(a) (Meth)acrylsäure,
(b) Monomethoxypolyethylenglykol(meth)acrylate und
(c) C₁₂-C₂₂-Fettalkohol+EO+PO(meth)acrylate einer Copolymerisation unterwirft und das so erhaltene Reaktionsprodukt danach mit einer alkalischen Base neutralisiert und in Wasser solubilisiert.

2. Verfahren zur Herstellung von Pfropfpolymeren, bei dem man:
(i) Mischungen von
(a) (Meth)acrylsäure,
(b) Monomethoxypolyethylenglycol(meth)-acrylaten und
(c) C₁₂-C₂₂-Fettalkohol+EO+PO(meth)acrylaten
einer radikalischen Polymerisation unterwirft,
(ii) die Säuregruppen der so erhaltenen Polymere mit Hilfe einer alkalischen Base neutralisiert und
(iii) die neutralisierten Polymere in Wasser solubilisiert.

3. Verfahren nach Anspruch 2, **dadurch gekennzeichnet, daß** man Monomethoxypolyethylenglykol(meth)acrylate (Komponente b) gemäß der allgemeinen Formel (I) verwendet:
**CH₃O(CH₂CH₂O)ₙOC-CR¹=CH₂** **(I)**
worin R¹ für Wasserstoff oder eine Methylgruppe steht und n eine ganze Zahl von 1 bis 200 bedeutet.

4. Verfahren nach Anspruch 2 und/oder 3, **dadurch gekennzeichnet, daß** man Fettalkohol+EO+PO(meth)-acrylate (Komponente c) gemäß der allgemeinen Formel (II) verwendet:
**R²O(CH₂CH₂O)ₚ₁(CHCH₃CH₂O)_{q}(CH₂CH₂O)ₚ₂OC-CR¹=CH₂** **(II)**
worin R¹ für Wasserstoff oder eine Methylgruppe steht, R² für einen Alkyl- oder Alkenylrest mit 12 bis 22 Kohlenstoffatomen steht, p1 und p2 unabhängig voneinander für 0 oder ganze Zahlen von 1 bis 50 stehen und q für eine ganze Zahl von 1 bis 50 steht.

5. Verfahren nach einem der vorhergehenden Ansprüche 2 bis 4, **dadurch gekennzeichnet, daß** man Fettalkohol+EO+PO(meth)acrylat-Blockpolymere (Komponente c) gemäß der allgemeinen Formel (II) verwendet, worin R² für eine Alkylgruppe mit 16 bis 18 Kohlenstoffatomen steht, p1 für eine ganze Zahl zwischen 1 und 5 steht, p2 für 0 steht und q eine ganze Zahl zwischen 10 und 15 bedeutet.

6. Verfahren nach einem der vorhergehenden Ansprüche 2 bis 4, **dadurch gekennzeichnet, daß** man statistisch aufgebaute Fettalkohol+EO+PO(meth)-acrylat-Polymere (Komponente c) gemäß der allgemeinen Formel (II) verwendet, worin R² für eine Alkylgruppe mit 16 bis 18 Kohlenstoffatomen steht, p1 und p2 für eine durchschnittliche ganze Zahl zwischen 1 und 5 stehen und q eine durchschnittliche ganze Zahl zwischen 10 und 15 bedeutet.

7. Verfahren nach einem der vorhergehenden Ansprüche 2 bis 6, **dadurch gekennzeichnet, daß** man die Monomere (a), (b) und (c) in einem Molverhältnis von 1:(0,1-10):(0,1-10) verwendet.

8. Verfahren nach einem der vorhergehenden Ansprüche 2 bis 7, **dadurch gekennzeichnet, daß** man die Polymere zum Erhalt einer wäßrigen Lösung, die einen Wirkstoffgehalt von 20 bis 50 Gew.-% zeigt, solubilisiert.

9. Verwendung von Pfropfpolymeren nach Anspruch 1 als Verflüssigungsmittel für Beton- oder Putzverzögerer.

10. Verwendung von Pfropfpolymeren nach Anspruch 1 als Entschäumer für Beton- oder Putzverzögerer.

## Revendications

1. Polymères greffés, susceptibles d'être obtenus en soumettant
(a) de l'acide (méth)acrylique,
(b) des (méth)acrylates de monométhoxypolyéthylèneglycol, et
(c) des (méth)acrylates d'alcool gras en C₁₂-C₂₂ + EO + PO
à une copolymérisation et en neutralisant ensuite le produit de réaction ainsi obtenu avec une base alcaline et en le solubilisant dans l'eau.

2. Procédé de fabrication de polymères greffés comprenant les étapes consistant à
(i) soumettre des mélanges
(a) d'acide (méth)acrylique,
(b) de (méth)acrylates de monométhoxypolyéthylèneglycol, et
(c) de (méth)acrylates d'alcool gras en C₁₂-C₂₂ + EO + PO
à une polymérisation radicalaire,
(ii) neutraliser les groupes acides des polymères ainsi obtenus au moyen d'une base alcaline, et
(iii) solubiliser les polymères neutralisés dans l'eau.

3. Procédé selon la revendication 2, **caractérisé en ce que** l'on utilise des (méth)acrylates de monométhoxypolyéthylèneglycol (constituant b) répondant à la formule générale (I),
**CH₃O(CH₂CH₂O)ₙOC-CR¹=CH²** **(I)**
dans laquelle R¹ désigne un atome d'hydrogène ou un groupe méthyle et n représente un nombre entier allant de 1 à 200.

4. Procédé selon les revendications 2 et/ou 3, **caractérisé en ce que** l'on utilise des (méth)acrylates d'alcool gras + EO + PO (constituant c) répondant à la formule générale (II),
**R²O (CH₂CH₂O)ₚ₁(CHCH₃CH₂O)_{q}(CH₂CH₂O)ₚ₂OC-CR¹=CH₂** **(II)**
dans laquelle R¹ désigne un atome d'hydrogène ou un groupe méthyle, R² représente un radical alkyle ou alcényle comportant 12 à 22 atomes de carbone, p1 et p2 représentent indépendamment 0 ou des nombres entiers de 1 à 50, et q représente un nombre entier allant de 1 à 50.

5. Procédé selon l'une quelconque des revendications 2 à 4 précédentes, **caractérisé en ce que** l'on utilise des polymères séquencés (méth)acrylate d'alcool gras + EO + PO (constituant c) répondant à la formule générale (II), dans laquelle R² désigne un groupe alkyle comportant 16 à 18 atomes de carbone, p1 représente un nombre entier compris entre 1 et 5, p2 désigne 0 et q désigne un nombre entier compris entre 10 et 15.

6. Procédé selon l'une quelconque des revendications 2 à 4 précédentes, **caractérisé en ce que** l'on utilise des polymères statistiques (méth)acrylate d'alcool gras + EO + PO (constituant c) répondant à la formule générale (II), dans laquelle R² désigne un groupe alkyle comportant 16 à 18 atomes de carbone, p1 et p2 représentent un nombre entier moyen compris entre 1 et 5 et q désigne un nombre entier moyen compris entre 10 et 15.

7. Procédé selon l'une quelconque des revendications 2 à 6 précédentes, **caractérisé en ce que** les monomères (a), (b) et (c) sont utilisés dans un rapport molaire de 1: (0, 1-10) : (0, 1-10).

8. Procédé selon l'une quelconque des revendications 2 à 7 précédentes, **caractérisé en ce que** les polymères sont solubilisés pour permettre d'obtenir une solution aqueuse présentant une teneur en matière active de 20 à 50 % en poids.

9. Utilisation de polymères greffés selon la revendication 1 comme super-plastifiants pour retardateurs de béton ou de plâtre.

10. Utilisation de polymères greffés selon la revendication 1 comme antimousses pour retardateurs de béton ou de plâtre.
